# EUROPÄISCHE PATENTSCHRIFT

(11) **EP 2 270 377 B1**
(45) Veröffentlichungstag und Bekanntmachung des Hinweises auf die Patenterteilung: **07.05.2014**
(21) Anmeldenummer: 09164397.3
(22) Anmeldetag: 02.07.2009
(51) Int. Cl.: F16L 5/12

(54) **Hauseinführung**
House lead-through
Entrée de maison

(43) Veröffentlichungstag der Anmeldung: 05.01.2011
(73) Patentinhaber: Georg Fischer Fittings GmbH, 3160 Traisen (AT)
(72) Erfinder: Matischek, Rudolf, 3151 St. Georgen (AT)
(74) Vertreter: Fenner, Seraina

(56) Entgegenhaltungen:
- DE-A1- 4 039 909
- DE-A1- 4 202 660
- DE-C1- 4 242 236
- DE-C1- 4 444 118
- US-A1- 2004 045 234

## Beschreibung

Die Erfindung bezieht sich auf eine Hauseinführung durch eine Hausmauer zur Verbindung einer hausinternen Rohrleitung mit einer externen Versorgungsleitung, umfassend ein Metallrohrteil auf der hausinternen Seite der Hauseinführung, ein Kunststoffrohrteil auf der Seite der externen Versorgungsleitung, wobei das Metallrohrteil mit dem Kunststoffrohrteil in einem Übergangsbereich verbindbar angeordnet ist, und ein Mantelrohr zur Ummantelung zumindest des Übergangsbereichs, wobei der Übergangsbereich in der Hausmauer angeordnet ist, wobei die Hauseinführung auf der Aussenseite das Mantelrohr aufweist. Eine solche Hauseinführung ist aus der DE 42 42 236 C1 bekannt.

Im Rohrleitungsbau, insbesondere bei Rohrleitungen für die Versorgung von Wohnhäusern mit Trinkwasser und Gas werden die hausinternen Leitungen mit den Leitungen des Versorgungsnetzes am Wohnort verbunden. Die externen Versorgungsleitungen sind üblicherweise aus Kunststoff hergestellt, während die hausinternen Leitungen üblicherweise aus Metall hergestellt werden. Eine Hauseinführung stellt den Übergang der externen Versorgungsleitung zu den hausinternen Leitungen dar. Die Hauseinführung wird durch die Hausmauer hindurchgeführt.

Aus der EP 040 791 B1 ist eine gattungsgemässe Hauseinführung bekannt. Die Versorgungsleitung aus Kunststoff erstreckt sich in einem koaxialen Mantelrohr durch die Hausmauer hindurch bis ins Hausinnere. Der Übergang zur hausinternen Leitung ist im Hausinneren angeordnet. Das Mantelrohr ist aus Stahl oder einem anderen nicht brennbaren Werkstoff, wie beispielsweise Beton oder Keramik, hergestellt. Das Mantelrohr ist mittels auf der Aussenseite angeschweissten, angegossenen oder angeformten Körpern aus dem gleichen Werkstoff wie das Mantelrohr in der Hausmauer radial und axial verankert.

Ausgehend von diesem Stand der Technik ist es Aufgabe der Erfindung, eine Hauseinführung anzugeben, die möglichst einfach und kostengünstig hergestellt werden kann, die einfach eingebaut werden kann und die eine möglichst gute Wärmedämmung gewährleistet.

Diese Aufgabe wird gelöst durch eine Hauseinführung bei der das Mantelrohr aus einer Vergussmasse bestehend aus Polyurethan und Sand hergestellt ist, wobei an der Aussenseite des Mantelrohres radial ausgebildete Rippen, Nuten und Längsrippen angeordnet sind und eine gute Bindung zwischen Montagemittel und dem Mantelrohr aus Polyurethan und Sand erreicht wird.

Bevorzugte Weiterbildungen der Erfindung ergeben sich aus den abhängigen Ansprüchen.

Es ist von Vorteil, dass an der Stelle der Hauseinführung durch die Hausmauer die Wärmedämmung möglichst aufrecht erhalten bleibt. Dies wird dadurch erreicht, dass das Mantelrohr aus einer Kunstharzvergussmasse hergestellt ist. Dies wird auch dadurch erreicht, dass das Mantelrohr aus einer Vergussmasse bestehend aus einer Mischung von flammgehemmtem Polyurethan und Sand, insbesondere Giessereialtsand hergestellt ist.

Es ist auch von Vorteil, dass die Hauseinführung den neuesten gesundheitlichen Vorschriften entspricht. Dies wird beispielsweise dadurch erreicht, dass das Metallrohrteil aus korrosionsbeständigen Werkstoffen gefertigt ist oder an der Innenseite eine Kunststoffpulverbeschichtung aus lebensmittelverträglichem Epoxidharz oder Polyamid aufweist.

Weiters ist es auch von Vorteil, dass die Hauseinführung möglichst einfach eingebaut werden kann. Dies wird dadurch erreicht, dass die Hauseinführung mit dem umgossenen Mantelrohr als komplettes Bauteil eingebaut werden kann.

Ein Ausführungsbeispiel der Erfindung wird anhand der Figuren beschrieben. Es zeigen:
Figur 1 eine Sicht auf eine erfindungsgemässe Hauseinführung,
Figur 2 einen Schnitt durch die Hauseinführung von Figur 1 entlang der Längachse,
Figur 3 einen Schnitt durch die Hauseinführung von Figur 1 senkrecht zur Längsachse und
Figur 4 eine ausschnittsweise Vergrösserung aus Figur 2

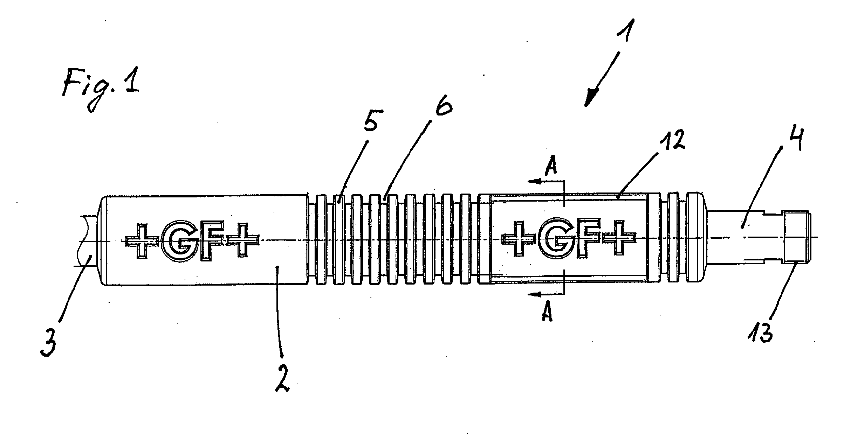

In Figur 1 ist eine Hauseinführung 1 für Gas- oder Wasserleitungsrohrsysteme schematisch dargestellt. Die Hauseinführung 1 weist auf der Aussenseite ein Mantelrohr 2 auf, das durch Umgiessen fest verbunden ist mit den innen liegenden Rohrteilen 3,4. In der Figur 1 ist die Hauseinführung 1 so dargestellt, wie sie auf einer Baustelle angeliefert wird. Das Mantelrohr 2 weist auf der Aussenseite Rippen 5 und Vertiefungen 6 auf, die vorteilhaft sind für eine gute axiale Verankerung in der Hausmauer. Die Auszugssicherheit der Hauseinführung ist sichergestellt. Weitere Rippen 12, die parallel zur Längsachse der Hauseinführung 1 am Mantelrohr 2 ausgebildet sind, dienen zur verdrehsicheren Befestigung in der Hausmauer. Links in Figur 1 ist ein Kunststoffrohrteil 3 und auf der gegenüberliegenden Seite ist rechts ein Metallrohrteil 4 dargestellt. An dem Kunststoffrohrteil 3 wird die externe Versorgungsleitung, ebenfalls aus Kunststoff, bauseitig angeschlossen. An dem Metallrohrteil 4 wird die hausinterne Rohrleitung, ebenfalls aus Metall, bauseitig angeschlossen. Hierzu weist das Ende des Metallrohrteiles 4 ein Gewinde 13 auf, wie es üblicherweise in der Gas- und Wasserinstallation verwendet wird. Anschliessend an die Hauseinführung 1 werden auf der hausinternen Seite eine Zähleinrichtung für den Gas- oder Wasserverbrauch vom Versorger oder von ihm beauftragten Firmen angeschlossen.

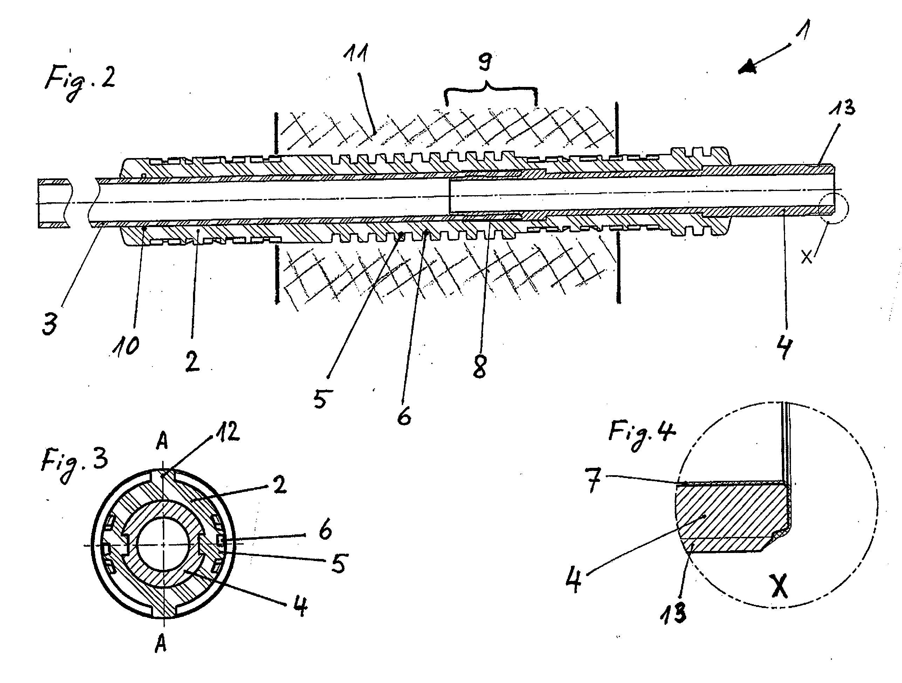

In Figur 2 ist die Hauseinführung 1 geschnitten entlang der Längsachse dargestellt. Die Hauseinführung 1 ist zusammengesetzt aus einem Kunststoffrohrteil 3, einem Metallrohrteil 4 mit einer Pulverbeschichtung 7 auf der Rohrinnenseite, einer Klemmhülse 8 im Übergangsbereich 9, einem O-Ring 10 und einem Mantelrohr 2. Die Pulverbeschichtung 7 wird aus einem lebensmittelverträglichen Epoxidharz oder Polyamid hergestellt und dient gleichzeitig als schwerer Korrosionsschutz.

Das Kunststoffrohrteil 3 wird im Übergangsbereich 9 über das Ende des Metallrohrteils 4 geschoben und weitet sich hierdurch leicht auf. Die Klemmhülse 8 ist eine zylindrische dünnwandige Metallhülse 8, die über dem Übergangsbereich 9 geschoben wird und mit einem dazu geeigneten Werkzeug verquetscht werden muss. Bevor die halbfertige Hauseinführung 1 mit dem Mantelrohr 2 umgossen wird, wird auf dem Kunststoffrohrteil 3 einen O-Ring 10 geschoben um eventuell von aussen eintretende Feuchtigkeit abzuwenden. Das Mantelrohr 2 überdeckt den Übergangsbereich 9 und ragt über die Hausmauer hinaus. Der metallische Teil der Hauseinführung ist aus einem Stück gefertigt.

In Figur 3 ist die Hauseinführung 1 geschnitten senkrecht zur Längsachse dargestellt. Hier sind die radial ausgebildeten Rippen 5, die Nuten 6 und die Längsrippen 12 auf der Aussenseite des Mantelrohres 2 ersichtlich. Figur 4 zeigt in einer Vergrösserung die Pulverbeschichtung 13 auf der Innenseite des Metallrohrteils 4.

Die Verfahrensschritte in der Herstellung der Hauseinführung 1 sind nacheinander die folgende:
- Herstellen und Beschichten des Metallrohrteils 4 mit einem lebensmittelverträglichen Epoxidharz oder Polyamid,
- Aufstecken des Kunststoffrohrteils 3 auf dem Metallrohrteil 4,
- Aufschieben der Klemmhülse 8,
- Verpressen der Klemmhülse 8 im Übergangsbereich 9,
- Einlegen des Halbfabrikates der Hauseinführung 1 in eine Giessform und
- Umgiessen des Halbfabrikates mit einer brandbeständigen Mischung aus Polyurethanharz und Sand, insbesondere Giessereialtsand, zur Bildung des Mantelrohres 2.

Die Mischung aus Polyurethanharz und Sand hat den Vorteil einer hohen Brandbeständigkeit. Es wird eine Brandbeständigkeit von mindestens 30 Minuten bei 650 °C erreicht. Altsand aus der Giesserei kann sinnvoll verwendet werden. Beim Einbau der Hauseinführung 1 in die Hausmauer 11 wird eine gute Bindung zwischen dem Montagemittel und dem Mantelrohr 2, erreicht. Als Montagemittel werden Quellmörtel oder geeignete zugelassene Schäume verwendet.

Mit dem hier beschriebenen Verfahren des Umgiessens mit Kunstharz, das bei Raumtemperatur und unter normalen Druckverhältnissen durchgeführt werden kann, kann eine teure Spritzgussanlage, die bei hohen Drücken und mit teueren Formen arbeitet, eingespart werden. Die neue Hauseinführung 1 ist flammgehemmt, kompakt und kostengünstig herstellbar.

## Patentansprüche

1. Hauseinführung (1) durch eine Hausmauer (11) zur Verbindung einer externen Versorgungsleitung mit einer hausinternen Rohrleitung, umfassend ein Metallrohrteil (4) auf der hausinternen Seite der Hauseinführung (1), ein Kunststoffrohrteil (3) auf der Seite der externen Versorgungsleitung, wobei das Metallrohrteil (4) mit dem Kunststoffrohrteil (3) in einem Übergangsbereich (9) verbindbar angeordnet ist, und ein Mantelrohr (2) zur Ummantelung zumindest des Übergangsbereichs (9), wobei der Übergangsbereich (9) in der Hausmauer (11) angeordnet ist, wobei die Hauseinführung (1) auf der Aussenseite das Mantelrohr (2) aufweist, **dadurch gekennzeichnet, dass** das Mantelrohr (2) aus einer Vergussmasse bestehend aus Polyurethan und Sand hergestellt ist, wobei an der Aussenseite des Mantelrohres (2) radial ausgebildete Rippen (5), Nuten (6) und Längsrippen (12) angeordnet sind und eine gute Bindung zwischen Montagemittel und dem Mantelrohr (2) aus Polyurethan und Sand erreicht wird.

2. Hauseinführung (1) nach Anspruch 1, **dadurch gekennzeichnet, dass** die Vergussmasse aus einer Mischung von flammgehemmtem Polyurethan und Giessereialtsand hergestellt ist.

3. Hauseinführung (1) nach mindestens einem der Ansprüche 1 bis 2, **dadurch gekennzeichnet, dass** das Metallrohrteil (4) an der Innenseite eine Kunststoffpulverbeschichtung (7) aus lebensmittelverträglichem Epoxidharz und Polyamid aufweist.

4. Hauseinführung (1) nach mindestens einem der Ansprüche 1 bis 3, **dadurch gekennzeichnet, dass** im Übergangsbereich (9) auf der Aussenseite des Kunststoffrohrteiles (3) eine Klemmhülse (8) angeordnet ist.

5. Hauseinführung (1) nach mindestens einem der Ansprüche 1 bis 4, **dadurch gekennzeichnet, dass** auf der Seite der externen Versorgungsleitung zwischen dem Kunststoffrohrteil (3) und dem Mantelrohr (2) mindestens ein O-Ring (10) angeordnet ist.

## Claims

1. House lead-in (1) through a house wall (11) for connecting an external supply line to a pipeline inside the house, comprising a metal pipe part (4) on that side of the house lead-in (1) which is inside the house, a plastic pipe part (3) on the side of the external supply line, wherein the metal pipe part (4) is arranged such that it can be connected to the plastic pipe part (3) in a transition region (9), and a casing tube (2) for sheathing at least the transition region (9), wherein the transition region (9) is arranged in the house wall (11), wherein the house lead-in (1) has the casing tube (2) on the outer side, **characterized in that** the casing tube (2) is produced from a casting compound consisting of polyurethane and sand, wherein radially formed ribs (5), grooves (6) and longitudinal ribs (12) are arranged on the outer side of the casing tube (2) and a good bonding between mounting means and the casing tube (2) consisting of polyurethane and sand is achieved.

2. House lead-in (1) according to Claim 1, **characterized in that** the casting compound is produced from a mixture of flame-retardant polyurethane and old foundry sand.

3. House lead-in (1) according to at least one of Claims 1 and 2, **characterized in that** the metal pipe part (4) has on the inner side a plastic powder coating (7) consisting of food-compatible epoxy resin and polyamide.

4. House lead-in (1) according to at least one of Claims 1 to 3, **characterized in that** a clamping sleeve (8) is arranged in the transition region (9) on the outer side of the plastic pipe part (3).

5. House lead-in (1) according to at least one of Claims 1 to 4, **characterized in that** at least one O-ring (10) is arranged on the side of the external supply line between the plastic pipe part (3) and the casing tube (2).

## Revendications

1. Entrée de maison (1) traversant un mur de maison (11) pour relier une canalisation d'alimentation externe à une canalisation tubulaire à l'intérieur de la maison, comprenant une partie tubulaire métallique (4) du côté de l'intérieur de la maison de l'entrée de maison (1), une partie tubulaire en plastique (3) du côté de la canalisation d'alimentation externe, la partie tubulaire métallique (4) étant disposée de manière à pouvoir être reliée à la partie tubulaire en plastique (3) dans une région de transition (9), et un tube d'enveloppe (2) pour l'enveloppement d'au moins la région de transition (9), la région de transition (9) étant disposée dans le mur de maison (11), l'entrée de maison (1) présentant, du côté extérieur, le tube d'enveloppe (2), **caractérisée en ce que** le tube d'enveloppe (2) est fabriqué en une masse de remplissage constituée de polyuréthane et de sable, des nervures (5), des rainures (6) et des nervures longitudinales (12) réalisées radialement étant disposées au niveau du côté extérieur du tube d'enveloppe (2) et une bonne liaison étant obtenue entre des moyens de montage et le tube d'enveloppe (2) en polyuréthane et en sable.

2. Entrée de maison (1) selon la revendication 1, **caractérisée en ce que** la masse de remplissage est fabriquée à partir d'un mélange de polyuréthane ignifugé et de sable de fonderie usagé.

3. Entrée de maison (1) selon au moins l'une quelconque des revendications 1 à 2, **caractérisée en ce que** la partie tubulaire métallique (4) présente, au niveau du côté intérieur, un revêtement de poudre de plastique (7) constitué de résine époxyde compatible avec les produits alimentaires et de polyamide.

4. Entrée de maison (1) selon au moins l'une quelconque des revendications 1 à 3, **caractérisée en ce que** dans la région de transition (9) du côté extérieur de la partie tubulaire en plastique (3) est disposée une douille de serrage (8).

5. Entrée de maison (1) selon au moins l'une quelconque des revendications 1 à 4, **caractérisée en ce que** du côté de la canalisation d'alimentation externe entre la partie tubulaire en plastique (3) et le tube d'enveloppe (2) est disposé au moins un joint torique (10).
